# EUROPEAN PATENT APPLICATION

(11) **EP 3 199 819 A1**
(43) Date of publication of application: **02.08.2017**
(21) Application number: 16203491.2
(22) Date of filing: 12.12.2016
(51) Int. Cl.: F04D 25/06, F02B 37/04, F02B 39/10, F02B 37/12, F02B 37/16, F04D 27/02

(54) **ELECTRIC SUPERCHARGING APPARATUS AND ELECTRIC SUPERCHARGING SYSTEM**

(30) Priority: 28.01.2016 JP 2016014139
(71) Applicant: AISIN SEIKI KABUSHIKI KAISHA, Kariya-shi Aichi-ken 448-8650 (JP)
(72) Inventor: UMEMURA, Chiaki, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

An electric supercharging apparatus (1, 201, 301) includes an impeller (15, 315) and a rotary electric machine (16) driving and rotating the impeller (15, 315) for supercharging an engine (102), the rotary electric machine (16) being configured to generate an electric power by a rotation of the impeller (15, 315) with an intake air based on a continuous operation of the engine (102) in a case where a fuel supply to the engine (102) is stopped.

## Description

### TECHNICAL FIELD

This disclosure generally relates to an electric supercharging apparatus and an electric supercharging system.

### BACKGROUND DISCUSSION

An electric supercharging apparatus and an electric supercharging system each of which includes a rotary electric machine are known.

For example, JP2013-24041A, which is hereinafter referred to as Reference 1, discloses an electric supercharging apparatus including an electric motor. The electric supercharging apparatus includes a compressor wheel which is driven to rotate by the electric motor. The electric motor consumes electric power for driving and rotating the compressor wheel so as to pressurize air suctioned from a suction port of the electric supercharging apparatus for supercharging an internal combustion engine (engine). Generally, the electric power for driving the electric motor is generated by an alternator via driving of the engine.

According to the electric supercharging apparatus disclosed in Reference 1, the engine is driven for generating the electric power so as to drive the electric motor for driving the compressor wheel. Thus, inconvenience where fuel is consumed occurs. As a result, in a case where the electric supercharging apparatus disclosed in Reference 1 is mounted to a vehicle, fuel consumption of the vehicle may decrease.

A need thus exists for an electric supercharging apparatus and an electric supercharging system which may restrain a decrease of fuel consumption of a vehicle c power generation in a case where the electric supercharging apparatus is mounted to the vehicle.

### SUMMARY

According to an aspect of this disclosure, an electric supercharging apparatus includes an impeller and a rotary electric machine driving and rotating the impeller for supercharging an engine, the rotary electric machine being configured to generate an electric power by a rotation of the impeller with an intake air based on a continuous operation of the engine in a case where a fuel supply to the engine is stopped.

Accordingly, in a case where the electric supercharging apparatus is mounted to a vehicle, the rotary electric machine generates the electric power by the intake air suctioned into the engine without consuming fuel. Because of the power generation by the rotary electric machine without consuming the fuel, a driving force of the engine for the power generation may be reduced. As a result, an amount of consumption of the fuel may decrease. In a case where the electric supercharging apparatus is mounted to the vehicle, a decrease of fuel consumption of the vehicle caused by the power generation may decrease.

The electric supercharging apparatus further includes a bypass passage bypassing the impeller and a passage switching valve switching between the bypass passage and a passage passing through the impeller, the passage switching valve switching to the passage passing through the impeller for rotating the impeller by the intake air in a case where the fuel supply to the engine is stopped.

Accordingly, when the fuel supply to the engine is stopped, the intake air passes through the impeller. Thus, the intake air rotates the impeller so that the rotary electric machine generates the electric power. In a case where the fuel is supplied to the engine and the engine is not supercharged by the electric supercharging apparatus, the intake air bypasses the impeller via the bypass passage so as to restrain that the supply of the intake air to the engine is interrupted by the impeller.

According to another aspect of this disclosure, an electric supercharging system includes an electric supercharging apparatus including an impeller and a rotary electric machine which drives and rotates the impeller, the electric supercharging apparatus supercharging an engine by driving and rotating the impeller by the rotary electric machine, an intake control valve arranged at an intake passage where an intake air suctioned by the engine passes through, and a control portion controlling the intake control valve to cause the intake air which is suctioned on a basis of a continuous operation of the engine to pass through the impeller to be supplied to the engine in a case where a fuel supply to the engine is stopped for rotating the impeller to perform a power generation by the rotary electric machine.

Because of the power generation by the rotary electric machine without consuming the fuel, the driving force of the engine for the power generation may be reduced. As a result, an amount of consumption of the fuel may decrease. In a case where the electric supercharging apparatus (electric supercharging system) is mounted to the vehicle, a decrease of fuel consumption of the vehicle caused by the power generation may decrease.

The control portion is configured to control an opening degree of a throttle valve serving as the intake control valve to cause the intake air to be supplied to the engine on a basis of the continuous operation of the engine in a case where an accelerator operation relative to a vehicle is turned off.

In an electric supercharging system including a commonly-used throttle valve, the throttle valve is configured to close in a case where the accelerator operation is turned off. In a case where the accelerator operation relative to the vehicle is turned off during the driving of the vehicle and the operation of the engine is continued, the intake air is interrupted by the throttle valve that is closed, which inhibits the supply of the intake air to the engine. Thus, the impeller of the electric supercharging system is inhibited from rotating by the intake air. Therefore, in a case where the accelerator operation relative to the vehicle is turned off, the control portion is configured to control the opening degree of the throttle valve serving as the intake control valve so that the operation of the engine is continued to supply the intake air to the engine even in a case where the accelerator operation relative to the vehicle is turned off. Even in a case where the accelerator operation relative to the vehicle is turned off, the opening degree of the throttle valve is controlled so that the intake air is supplied to the engine. Thus, the intake air suctioned by the engine rotates the impeller so that the rotary electric machine generates the electric power.

The electric supercharging apparatus includes a first bypass passage which bypasses the impeller and a first intake passage switching valve serving as the intake control valve and switching between the first bypass passage and a passage passing through the impeller. The control portion is configured to control the first intake passage switching valve to switch to the passage passing through the impeller for rotating the impeller by the intake air in a case where the fuel supply to the engine is stopped.

Accordingly, when the fuel supply to the engine is stopped, the intake air passes through the impeller via the passage through which the intake air passes. Thus, the intake air rotates the impeller so that the rotary electric machine generates the electric power. In a case where the fuel is supplied to the engine and the engine is not supercharged by the electric supercharging apparatus, the intake air bypasses the impeller via the first bypass passage so as to restrain that the supply of the intake air to the engine is interrupted by the impeller.

The control portion is configured to control a second intake passage switching valve serving as the intake control valve to switch from a passage passing through a turbo-side impeller of a turbocharger which supercharges the engine by a rotation of the turbo-side impeller with an exhaust air emitted from the engine to a second bypass passage which bypasses the turbocharger in a case where the fuel supply to the engine is stopped.

Accordingly, the intake air bypasses the turbocharger when the fuel supply to the engine is stopped. A decrease of flow volume of the intake air caused by passing of the intake air through the turbo-side impeller may decrease, which restrains a decrease of power generation amount.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram of an electric supercharging system in a case where an accelerator is turned on according to a first embodiment disclosed here;
Fig. 2 is a block diagram of the electric supercharging system in a case where the accelerator is turned off according to the first embodiment;
Fig. 3 is a block diagram of the electric supercharging system in a case where the accelerator is turned off according to a second embodiment disclosed here;
Fig. 4 is a block diagram of the electric supercharging system in a case where the accelerator is turned off according to a third embodiment disclosed here; and
Fig. 5 is a block diagram of the electric supercharging system in a case where the accelerator is turned off according to a modified example of the first to third embodiments.

### DETAILED DESCRIPTION

Embodiments are explained with reference to the attached drawings.

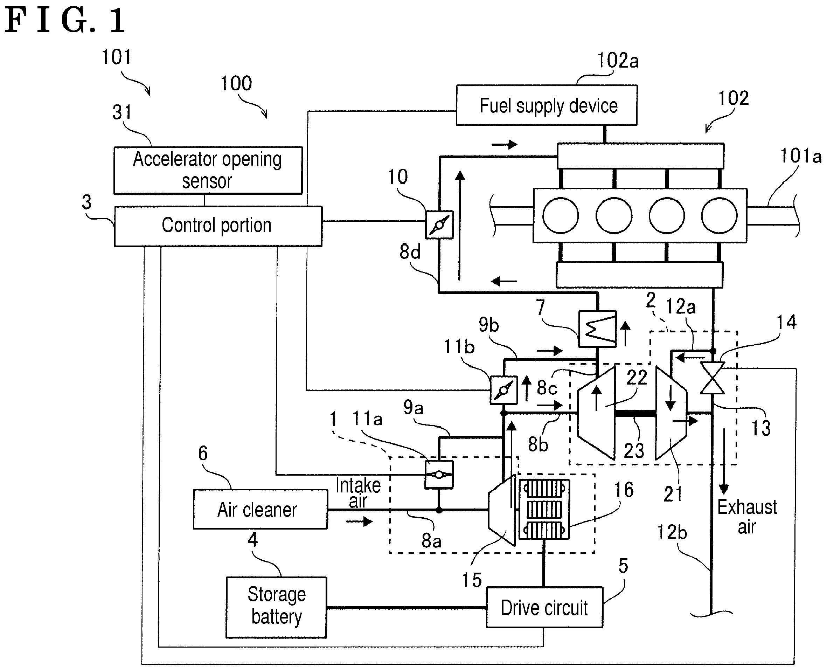

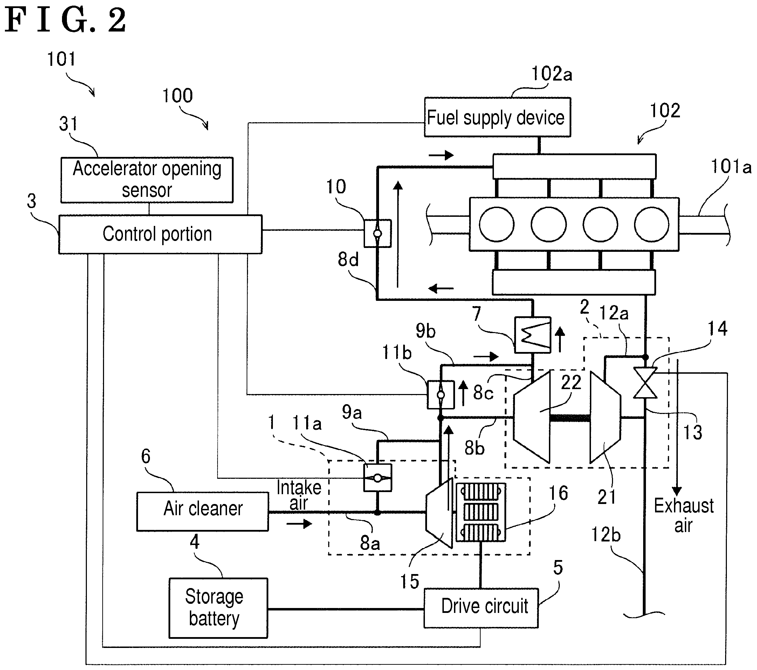

A construction of an electric supercharging system 100 including an electric supercharging apparatus 1 according to a first embodiment is explained with reference to Figs. 1 and 2.

As illustrated in Fig. 1, the electric supercharging system 100 is mounted to a vehicle 101, for example. The electric supercharging system 100 includes the electric supercharging apparatus 1 which supercharges an internal combustion engine (engine) 102 of the vehicle 101 for increasing output and torque of the engine 102. In addition, in the first embodiment, the engine 102 is constituted as a gasoline engine, for example, and the vehicle 101 is constituted as a gasoline automobile, for example.

The electric supercharging system 100 also includes a turbocharger 2. That is, the electric supercharging system 100 is configured to be a multistage (two-stage) supercharging system where the electric supercharging apparatus 1 serving as an electric supercharger and the turbocharger 2 serving as an exhaust turbocharger are arranged in series. An amount of supercharging (speed of supercharging) by the turbocharger 2 depends on a magnitude of exhaust energy of the engine 102. That is, in a case where the engine 102 is driven in a low rotation range, the exhaust energy of the engine 102 is relatively small, which requires an elongated time period for the turbocharger 2 to supercharge the engine 102. In this case, a response of output of the engine 102 relative to an accelerator operation (i.e., an operation performed on an accelerator pedal by an operator) may be delayed.

The electric supercharging apparatus 1 supercharges the engine 102 by consuming electric power. Thus, the electric supercharging apparatus 1 may supercharge the engine 102 without depending on the number of rotations (i.e., a rotation speed) of the engine 102. Because the electric supercharging system 100 is configured to be the two-stage supercharging system, the engine 102 which is driven in the low rotation range is supercharged by the electric supercharging apparatus 1. As a result, response delay of output of the engine 102 relative to the accelerator operation may be restrained.

In the vehicle 101, an axle 101a (shaft) connected to the engine 102 is provided. Specifically, the axle 101a is connected to a piston arranged within a combustion chamber of the engine 102. The axle 101a is configured to transmit rotation operations of wheels which are obtained by rotations of the wheels connected to the axle 101 a to the piston of the engine 102 regardless of the accelerator operation by the operator (i.e., on and off of the accelerator) in a case where the vehicle 101 is driven. According to the first embodiment, in the vehicle 101, the operation of the engine 102 (i.e., reciprocating operation of the piston) is continued even in a case where the accelerator is turned off so that the engine 102 continues air intake to the combustion chamber. In the disclosure, "the operation of the engine 102" is interpreted as having a broad meaning, i.e., includes not only driving of the engine 102 that is supplied with fuel but also includes reciprocation of the piston of the engine 102 which is caused by rotations of the wheels (rotation of the shaft) in a state where the engine 102 is not supplied with the fuel.

In the disclosure, a case where the accelerator is turned on corresponds to a case where an accelerator opening is greater than zero (i.e., greater than a fully closed state). In addition, a case where the accelerator is turned off corresponds to a case where the accelerator opening is substantially zero (i.e., the accelerator operation is not performed).

The electric supercharging system 100 includes the turbocharger 2, a control portion 3, a storage battery 4, a drive circuit 5, an air cleaner 6, an intercooler 7, intake passages 8a, 8b, 8c, 8d, a first bypass passage 9a, a second bypass passage 9b, a throttle valve 10 serving as an example of an intake control valve, intake passage switching valves 11 a, 11 b, each of the intake passage switching valves 11 a and 11 b serving as examples of the intake control valve and a passage switching valve, exhaust passages 12a, 12b, a third bypass passage 13 and an exhaust passage switching valve 14.

The control portion 3 includes an engine control unit (ECU), for example. The control portion 3 is configured to obtain information of the accelerator operation by the operator (i.e., information of the accelerator opening) from an accelerator opening sensor 31, information of the number of rotations (rotation speed) of the engine 102 from the engine 102, and information of an amount of charge of the storage battery 4 from the storage battery 4, for example. The control portion 3 is configured to control components of the vehicle 101 as a whole based on the information obtained in the aforementioned manner.

Specifically, the control portion 3 is configured to control a fuel supply device 102a (injector) of the engine 102. The control portion 3 controls the fuel supply device 102a based on the information of the accelerator operation to thereby control an amount of fuel supplied to the engine 102. For example, in a case where the accelerator is turned off, the control portion 3 is configured not to supply the fuel to the engine 102.

The control portion 3 is also configured to control operations (i.e., opening and closing or an opening degree) of the throttle valve 10, the intake passage switching valves 11 a, 11 b and the exhaust passage switching valve 14. For example, the control portion 3 is configured to control the opening degree of the throttle valve 10 based on the information of the accelerator operation of the vehicle 101.

The storage battery 4 is constituted as a secondary battery which may charge and discharge the electric power. The storage battery 4 is connected to a rotary electric machine 16 of the electric supercharging apparatus 1 via the drive circuit 5. The storage battery 4 is configured to supply the electric power to the rotary electric machine 16 and to be supplied with the electric power which is generated by the rotary electric machine 16.

The drive circuit 5 is connected to the storage battery 4 and the rotary electric machine 16. The drive circuit 5 includes a power converter circuit (an inverter and a converter). The drive circuit 5 is configured to convert the electric power from the storage battery 4 to the electric power (i.e., alternate current) supplied to the rotary electric machine 16 by the power converter circuit (inverter). The drive circuit 5 is also configured to convert the electric power from the rotary electric machine 16 to the electric power (i.e., direct current) charged at the storage battery 4 by the power converter circuit (converter). The drive circuit 5 is configured to control a magnitude of power supply to the rotary electric machine 16 based on an instruction from the control portion 3. For example, in a case where the number of rotations of the engine 102 is relatively small, the control portion 3 controls the engine 102 to be supercharged by the electric supercharging apparatus 1 through the supply of the electric power to the rotary electric machine 16 by the drive circuit 5.

The air cleaner 6 includes a function to remove or cleanse dirt or dust in intake air (air) from the outside of the vehicle 101 and to decrease intake noise. The air cleaner 6 is configured to suction air from the outside of the vehicle 101 and to supply the air to the electric supercharging apparatus 1 or the turbocharger 2 via the intake passages 8a to 8d.

The intercooler 7 is configured to cool the intake air from the electric supercharging apparatus 1 or the turbocharger 2. The intercooler 7 is configured to supply the cooled intake air to the engine 102.

The intake passages 8a to 8d serve as passages (air passages) through which the intake air from the air cleaner 6 passes or flows to the engine 102. The intake passage 8a connects between the air cleaner 6 and the electric supercharging apparatus 1. The intake passage 8b connects between the electric supercharging apparatus 1 and the turbocharger 2. The intake passage 8c connects between the turbocharger 2 and the intercooler 7. The intake passage 8d connects between the intercooler 7 and the engine 102.

The first bypass passage 9a is arranged to bypass the electric supercharging apparatus 1 (specifically, an impeller 15) and is configured to connect between the intake passage 8a and the intake passage 8b. The second bypass passage 9b is arranged to bypass the turbocharger 2 (specifically, a turbo-side impeller 22) and is configured to connect between the intake passage 8b and the intake passage 8c.

The throttle valve 10 is constituted as an electronic throttle valve and is configured to control an amount of intake air of the engine 102, i.e., air suctioned into the engine 102, by changing the opening degree of the throttle valve 10 based on the instruction from the control portion 3. The throttle valve 10 is arranged at the intake passage 8d.

The intake passage switching valve 11 a serving as an example of a first intake passage switching valve is configured to switch between the first bypass passage 9a and the passage passing through the impeller 15 (i.e., the intake passages 8a and 8b). Specifically, the intake passage switching valve 11 a is arranged at the first bypass passage 9a and is configured to control the amount of intake air at the first bypass passage 9a by the instruction from the control portion 3.

The intake passage switching valve 11 b serving as an example of a second intake passage switching valve is configured to switch between the second bypass passage 9b and the passage passing through the turbocharger 2 (i.e., the intake passages 8b and 8c). Specifically, the intake passage switching valve 11 b is arranged at the second bypass passage 9b and is configured to control the amount of intake air at the second bypass passage 9b by the instruction from the control portion 3.

The exhaust passages 12a and 12b are exhaust passages where exhaust air emitted to the outside (for example, a catalyst device) from the engine 102 passes through. The exhaust passage 12a connects between the engine 102 and the turbocharger 2. The exhaust passage 12b connects between the turbocharger 2 and the outside (for example, the catalyst device). The third bypass passage 13 is connected to the exhaust passages 12a and 12b and is arranged to bypasses the turbocharger 2 (specifically, a turbine wheel 21).

The turbocharger 2 includes the turbine wheel 21 serving as an example of a turbine, the turbo-side impeller 22 and a shaft 23. The turbine wheel 21 is arranged at the exhaust passages 12a and 12b through which the exhaust air emitted from the engine 102 passes. The turbine wheel 21 is connected to the turbo-side impeller 22 via the shaft 23, the turbo-side impeller 22 being arranged at the intake passages 8b and 8c. The turbine wheel 21 rotates by the exhaust air so that the turbo-side impeller 22 rotates. The rotation of the turbine wheel 21 causes the turbo-side impeller 22 to rotate so that the engine 102 is supercharged by the intake air.

The exhaust passage switching valve 14 is arranged at the third bypass passage 13. The exhaust passage switching valve 14 is configured to switch the passage through which the exhaust air passes between the passage passing through the turbine wheel 21 of the turbocharger 2 (i.e., exhaust passages 12a and 12b) and the third bypass passage 13 based on the instruction from the control portion 3.

The exhaust passage switching valve 14 is constituted as a waste gate valve. That is, the exhaust passage switching valve 14 is configured to open so that the exhaust air passes through the third bypass passage 13 in a case where exhaust gas energy (an amount of exhaust gas) of the engine 102 exceeds a predetermined magnitude. In addition, the exhaust passage switching valve 14 is configured so that the opening degree thereof is controlled on a basis of the instruction from the control portion 3.

As illustrated in Fig. 1, the electric supercharging apparatus 1 includes the impeller 15 and the rotary electric machine 16 which drives and rotates the impeller 15.

Specifically, the impeller 15 is arranged at the intake passages 8a and 8b. The impeller 15 is configured to compress the intake air from the air cleaner 6 (intake passage 8a) and to emit the intake air which is compressed to the intake passage 8b. That is, the impeller 15 is constituted as a compressor wheel.

The rotary electric machine 16 is constituted as a motor driving and rotating the impeller 15 by consuming the electric power and as a generator generating the electric power by the rotation of the impeller 15. Specifically, the rotary electric machine 16 is configured to drive and rotate the impeller 15 by the electric power from the storage battery 4 via the drive circuit 5. In addition, the rotary electric machine 16 is configured to generate the electric power by the rotation of the impeller 15 with the intake air. The electric power generated at the rotary electric machine 16 is supplied to the storage battery 4 (i.e., charged at the storage battery 4) via the drive circuit 5.

In the first embodiment, as illustrated in Fig. 2, the electric supercharging apparatus 1 supercharges the engine 102 by the rotation and driving of the impeller 15 caused by the rotary electric machine 16. In addition, in a case where the fuel supply to the engine 102 is stopped, the electric supercharging apparatus 1 is configured to rotate the impeller 15 by the intake air suctioned via the air cleaner 6 based on the continuous operation of the engine 102 so as to generate the electric power by the rotary electric machine 16.

That is, the control portion 3 is configured to control the throttle valve 10, the intake passage switching valves 11 a and 11 b so that the intake air suctioned on a basis of the continuous operation of the engine 102 passes through the impeller 15 to be supplied to the engine 102 in a case where the fuel supply to the engine 102 is stopped (i.e., the accelerator is turned off). As a result, in the electric supercharging apparatus 1, the impeller 15 rotates by the intake air so that the power generation is performed by the rotary electric machine 16.

Specifically, in the first embodiment, in a case where the accelerator is turned off, i.e., the accelerator operation relative to the vehicle 101 is turned off, the control portion 3 is configured to control the opening degree of the throttle valve 10 so that the operation of the engine 102 is continued to supply the intake air to the engine 102. Specifically, the control portion 3 is configured to stop the fuel supply from the fuel supply device 102a to the engine 102 and to control the throttle valve 10 to open (i.e., control the opening degree of the throttle valve 10 so that the throttle valve 10 opens greater than a fully closed state) in a case where the accelerator is turned off.

The control portion 3 is configured to adjust the opening degree of the throttle valve 10 based on the amount of charge at the storage battery 4 (i.e., information of the amount of charge). That is, the control portion 3 is configured to control the opening degree of the throttle valve 10 to increase (for example, control the throttle valve 10 to fully open) with decrease of the amount of charge of the storage battery 4 and to decrease with increase of the amount of charge of the storage battery 4. In Fig. 2, the throttle valve 10 is fully opened, i.e., the opening degree of the throttle valve 10 is at maximum.

In the first embodiment, in a case where the fuel supply to the engine 102 is stopped, the control portion 3 controls the intake passage switching valve 11a so that the passage through which the intake air passes is switched to the passage passing through the impeller 15 (i.e., the intake passages 8a and 8b) so that the impeller 15 is rotated by the intake air.

Specifically, the control portion 3 stops the fuel supply to the engine 102 and fully closes the intake passage switching valve 11a in a case where the accelerator is turned off. The electric supercharging apparatus 1 is thus configured so that the intake air from the air cleaner 6 passes through the intake passage 8a and passes through the impeller 15 of the electric supercharging apparatus 1 to rotate the impeller 15.

In addition, in the first embodiment, the control portion 3 controls the intake passage switching valve 11 b so as to switch from the passage passing through the turbo-side impeller 22 of the turbocharger 2 to the second bypass passage 9b which bypasses the turbocharger 2 in a case where the fuel supply to the engine 102 is stopped.

Specifically, the control portion 3 is configured to stop the fuel supply to the engine 102 and to open (for example, fully open) the intake passage switching valve 11 b in a case where the accelerator is turned off. In this case, the intake air bypasses the turbocharger 2 (specifically, the turbo-side impeller 22).

In addition, in the first embodiment, the control portion 3 controls the exhaust passage switching valve 14 so as to switch from the passage passing through the turbine wheel 21 of the turbocharger 2 to the third bypass passage 13 which bypasses the turbocharger 2 in a case where the fuel supply to the engine 102 is stopped.

Specifically, in a case where the accelerator is turned off, the control portion 3 is configured to stop the fuel supply to the engine 102 and to open (for example, fully open) the exhaust passage switching valve 14. In this case, the exhaust air bypasses the turbocharger 2 (turbine wheel 21).

Next, an operation of the electric supercharging system 100 (electric supercharging apparatus 1) is explained with reference to Figs. 1 and 2.

In a case where the accelerator is turned on by the operation performed on the accelerator pedal by the operator of the vehicle 101, the control portion 3 controls to supply the fuel to the engine 102 from the fuel supply device 102a as illustrated in Fig. 1. At this time, the control portion 3 controls the opening of the throttle valve 10 to increase in conjunction with increase of the magnitude of acceleration so as to supply a greater amount of intake air to the engine 102. In a case where the number of rotations (rotation speed) of the engine 102 is relatively small, the control portion 3 closes (or decreases the opening degree of) the intake passage switching valve 11 a to drive the rotary electric machine 16 of the electric supercharging apparatus 1 to thereby rotate the impeller 15. The engine 102 is supercharged accordingly. At this time, the control portion 3 adjusts the opening degree of the intake passage switching valve 11 b so as to adjust respective amounts of supercharging by the electric supercharging apparatus 1 and the turbocharger 2.

In a case where the accelerator is turned off by the operation performed on the accelerator pedal by the operator of the vehicle 101 during the driving of the vehicle 101, the control portion 3 stops the fuel supply to the engine 102 by the fuel supply device 102a as illustrated in Fig. 2. At this time, the driving of the vehicle 101 is continued, the rotation operations of the wheels of the vehicle 101 are continued, and the rotation of the axle 101 a is continued. The reciprocating operation of the piston of the engine 102 connected to the axle 101 a is continued (i.e., the operation of the engine 102 is continued).

Then, in the first embodiment, the control portion 3 controls the opening degree of the throttle valve 10 so that the throttle valve 10 opens greater than the fully closed state (for example, the throttle valve 10 is fully opened) based on the amount of charge at the storage battery 4, controls the opening degree of the intake passage switching valve 11 a so that the intake passage switching valve 11a is fully closed and controls the opening degree of the intake passage switching valve 11 b so that the intake passage switching valve 11 b is opened greater than the fully closed state (for example, the intake passage switching valve 11 b is fully opened). Accordingly, the intake air may pass through the intake passages 8a to 8d from the air cleaner 6 to the engine 102. In addition, the opening degree of the exhaust passage switching valve 14 is controlled so that the exhaust passage switching valve 14 is opened greater than the fully closed state (for example, the exhaust passage switching valve 14 is fully opened).

The intake air which passes through the air cleaner 6 then passes through the impeller 15 of the electric supercharging apparatus 1 so as to rotate the impeller 15. At this time, the rotation of the impeller 15 causes the rotary electric machine 16 to generate the electric power. The electric power generated by the rotary electric machine 16 is transmitted to the storage battery 4 via the drive circuit 5 and is charged at the storage battery 4.

Afterwards, the intake air passes through the second bypass passage 9b which bypasses the turbocharger 2 and passes through the intercooler 7 to reach the engine 102 (specifically, the combustion chamber). The intake air suctioned to the engine 102 passes through, as the exhaust air, the third bypass passage 13 which bypasses the turbocharger 2 and passes through the exhaust passage 12b. The exhaust gas is discharged to the outside of the electric supercharging system 100.

According to the first embodiment, the following effects are obtainable.

In the first embodiment, in a case where the electric supercharging apparatus 1 is mounted to the vehicle 101, the rotary electric machine 16 generates the electric power by the intake air suctioned into the engine 102 without consuming the fuel. Because of the power generation by the rotary electric machine 16 without consuming the fuel, a driving force of the engine 102 for the power generation may be reduced. As a result, an amount of consumption of the fuel may decrease. In a case where the electric supercharging apparatus 1 is mounted to the vehicle 101, a decrease of fuel consumption of the vehicle 101 caused by the power generation may decrease.

In addition, in the first embodiment, when the fuel supply to the engine 102 is stopped, the intake air passes through the impeller 15. Thus, the intake air rotates the impeller 15 so that the rotary electric machine 16 generates the electric power. In a case where the fuel is supplied to the engine 102 and the engine 102 is not supercharged by the electric supercharging apparatus 1, the intake air bypasses the impeller 15 via the first bypass passage 9a so as to restrain that the supply of the intake air to the engine 102 is interrupted by the impeller 15.

Further, in the first embodiment, even in a case where the accelerator operation relative to the vehicle 101 is turned off, the opening degree of the throttle valve 10 is controlled so that the intake air is supplied to the engine 102. Thus, the intake air suctioned by the engine 102 rotates the impeller 15 so that the rotary electric machine 16 generates the electric power.

Furthermore, in the first embodiment, even in a case where the turbocharger 2 is mounted to the electric supercharging system 100, the intake air bypasses the turbocharger 2 when the fuel supply to the engine 102 is stopped. A decrease of flow volume of the intake air caused by passing of the intake air through the turbo-side impeller 22 may decrease, which restrains a decrease of power generation amount.

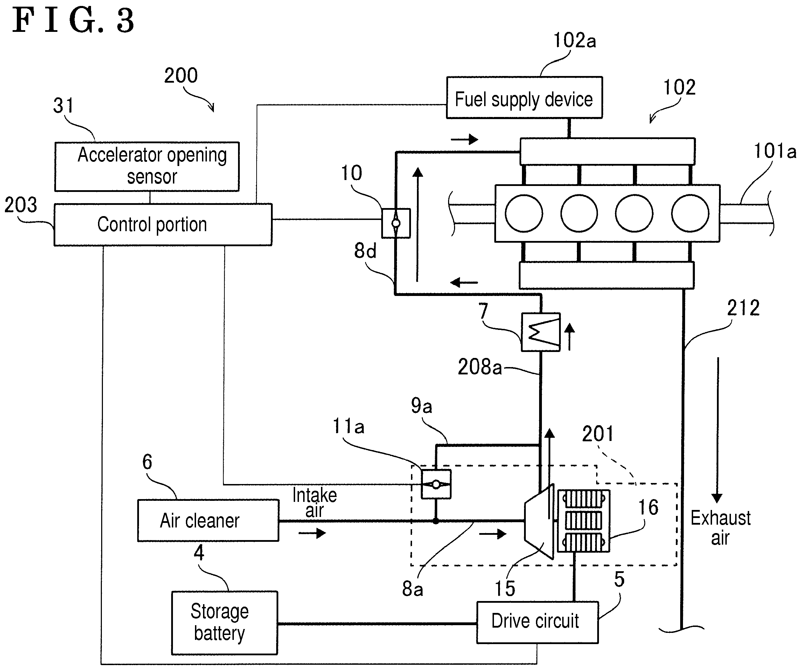

A construction of an electric supercharging system 200 according to a second embodiment is explained with reference to Fig. 3. In the first embodiment, the electric supercharging system 100 is configured as the two-stage supercharging system with the turbocharger 2. In the second embodiment, being different from the first embodiment, the electric supercharging system 200 is not provided with the turbocharger 2 and is provided, as the supercharging apparatus, only with an electric supercharging apparatus 201. In the second embodiment, the same constructions as the first embodiment bear the same reference numerals as the first embodiment and explanations of such constructions are omitted.

The electric supercharging system 200 according to the second embodiment includes the electric supercharging apparatus 201, a control portion 203, an intake passage 208a and an exhaust passage 212. That is, the electric supercharging system 200 according to the second embodiment is configured as the supercharging system including only the electric supercharging apparatus 201 (electric supercharger) as the supercharging apparatus.

The electric supercharging apparatus 201 includes the impeller 15 and the rotary electric machine 16. The control portion 203 is configured to control operations of the electric supercharging apparatus 201, the fuel supply device 102a, the throttle valve 10 and the intake passage switching valve 11 a, for example.

The intake passage 208a is a passage through which the intake air suctioned by the engine 102 passes and is a passage connecting between the electric supercharging apparatus 201 and the intercooler 7. The exhaust passage 212 is arranged between the engine 102 and the outside.

In the second embodiment, the control portion 203 is configured to control the throttle valve 10 and the intake passage switching valve 11a so that the intake air suctioned by the engine 102 based on the continuous operation of the engine 102 passes through the impeller 15 to be supplied to the engine 102 in a case where the fuel supply to the engine 102 is stopped. As a result, the impeller 15 is rotated to achieve the power generation by the rotary electric machine 16.

Specifically, in a case where the accelerator is turned off during the driving of the vehicle 101, the control portion 203 is configured to stop the fuel supply to the engine 102 from the fuel supply device 102a and to open the throttle valve 10 greater than the fully closed state while closing the intake passage switching valve 11a. Accordingly, the engine 102 continues suctioning the air so that the impeller 15 of the electric supercharging apparatus 201 rotates, thereby causing the rotary electric machine 16 to generate the electric power. The storage battery 4 charges the electric power which is generated by the rotary electric machine 16.

The construction of the second embodiment is similar to the first embodiment.

According to the second embodiment, the following effects are obtainable.

In the second embodiment, because the turbocharger 2 is not provided at the electric supercharging system 100, enlargement of the electric supercharging system 200 is restrained. As a result, in a case where the electric supercharging system 200 is mounted to the vehicle 101 which is constructed in a relatively small size (i.e., a compact vehicle, for example), enlargement of the vehicle 101 is restrained.

The effects of the second embodiment are similar to the effects of the first embodiment.

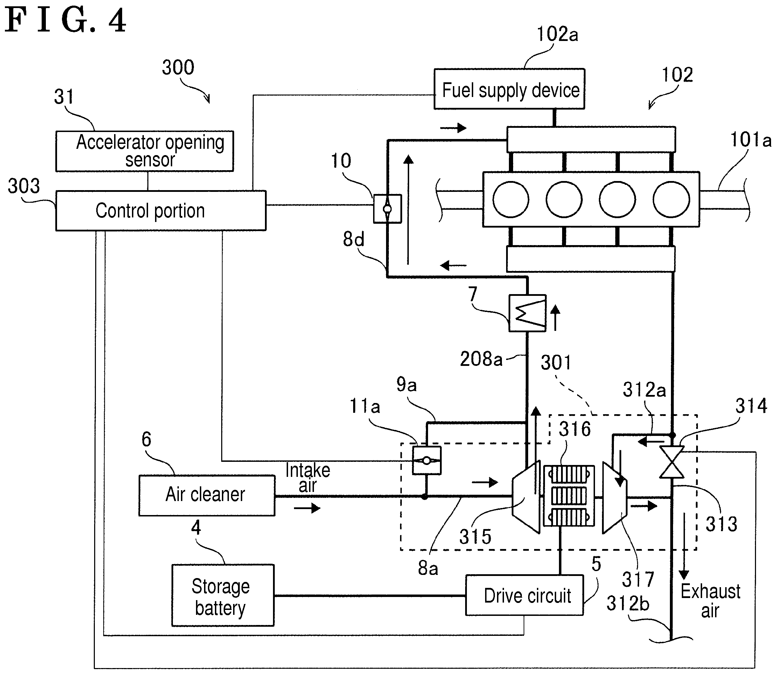

A construction of an electric supercharging system 300 according to a third embodiment is explained with reference to Fig. 4. In the first embodiment, the electric supercharging system 100 is configured so that the electric supercharging apparatus 1 and the turbocharger 2 serve as separate apparatuses from each other. In the third embodiment, being different from the first embodiment, the electric supercharging system 300 is configured to include an electric supercharging apparatus 301 which also includes a function of the turbocharger. In the third embodiment, the same constructions as the first and second embodiments bear the same reference numerals as the first and second embodiments and explanations of such constructions are omitted.

The electric supercharging system 300 according to the third embodiment includes the electric supercharging apparatus 301 including the function of the turbocharger, a control portion 303, the intake passage 208a, the throttle valve 10, the intake passage switching valve 11 a, exhaust passages 312a, 312b, a fourth bypass passage 313 and an exhaust passage switching valve 314.

In the third embodiment, the electric supercharging apparatus 301 includes an impeller 315, a rotary electric machine 316 and a turbine wheel 317 rotating by the exhaust air emitted from the engine 102. The impeller 315 is configured to rotate by a rotation of the turbine wheel 317 or the rotary electric machine 316 for supercharging the engine 102. That is, the impeller 315 is constituted as a compressor wheel of the electric supercharger and as a compressor wheel of the turbocharger (exhaust turbocharger).

The rotary electric machine 316 is connected to the impeller 315 and the turbine wheel 317 and is configured to generate the electric power by the rotation of the impeller 315 or the turbine wheel 317. The rotary electric machine 316 is configured to transmit the electric power that is generated at the rotary electric machine 316 to the storage battery 4 via the drive circuit 5. The storage battery 4 is configured to charge the electric power generated by the rotary electric machine 316.

The exhaust passage 312a connects between the engine 102 and the electric supercharging apparatus 301 (specifically, the turbine wheel 317). The exhaust passage 312b is arranged between the electric supercharging apparatus 301 (the turbine wheel 317) and the outside (for example, a catalyst device). The fourth bypass passage 313 is connected to the exhaust passages 312a and 312b to be arranged by bypassing the electric supercharging apparatus 301 (specifically, the turbine wheel 317).

The exhaust passage switching valve 314 is configured in a manner that the opening thereof is controlled on a basis of an instruction from the control portion 303.

In the third embodiment, the control portion 303 controls so that the rotary electric machine 316 generates the electric power by the rotation of the impeller 315 which is achieved by the intake air in a case where the fuel supply to the engine 102 is stopped.

Specifically, the control portion 303 stops the fuel supply to the engine 102 in a case where the accelerator operation relative to the vehicle 101 is turned off. The control portion 303 then opens the throttle valve 10 greater than the fully closed state, for example, fully opens the throttle valve 10, and closes each of the intake passage switching valve 11 a and the exhaust passage switching valve 314.

Accordingly, the intake air from the air cleaner 6 passes through the impeller 315 of the electric supercharging apparatus 301 while rotating the impeller 315 to reach the engine 102. The intake air which is suctioned by the engine 102 thereafter passes through the turbine wheel 317 of the electric supercharging apparatus 301 as the exhaust air to be discharged to the outside.

At this time, the rotary electric machine 316 of the electric supercharging apparatus 301 generates the electric power by the rotation of the impeller 315 with the intake air and by the rotation of the turbine wheel 317 with the exhaust air. The generated electric power is transmitted to the storage battery 4 via the drive circuit 5.

The construction of the third embodiment is similar to the construction of the first embodiment.

In the third embodiment, the following effects are obtainable.

In the third embodiment, the electric supercharging apparatus 301 also includes the function as the turbocharger. Thus, as compared to a case where the electric supercharging apparatus 301 and the turbocharger are separately provided from each other, enlargement of the electric supercharging system 300 is restrained.

The effects of the third embodiment are similar to the effects of the first embodiment.

The aforementioned disclosure is explained as an example and is not restrictive. The disclosure may be appropriately changed or modified.

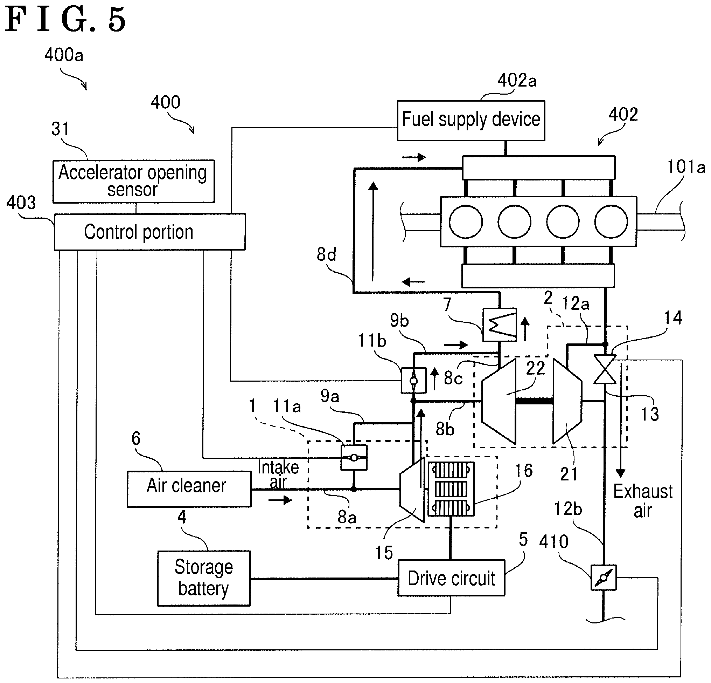

For example, in the aforementioned first to third embodiments, each of the electric supercharging systems 100, 200 and 300 includes the throttle valve 10. Alternatively, as illustrated in Fig. 5 as a modified example of the first to third embodiments, an electric supercharging system 400 without the throttle valve 10 may be configured.

The electric supercharging system 400 according to the modified example of the first to third embodiments does not include the throttle valve 10 as illustrated in Fig. 5. The electric supercharging system 400 is mounted to a diesel automobile 400a including a diesel engine 402, for example. The electric supercharging system 400 includes the electric supercharging apparatus 1, a control portion 403 and an exhaust brake valve 410.

The control portion 403 is configured to control a fuel supply device 402a supplying the fuel to the diesel engine 402 and to control the opening of each of the intake passage switching valves 11 a, 11 b, the exhaust passage switching valve 14 and the exhaust brake valve 410.

In a case where the accelerator operation relative to the diesel automobile 400a is turned off, the control portion 403 controls the intake passage switching valve 11a to be closed, the intake passage switching valve 11 b to be opened (i.e., open the intake passage switching valve 11 b greater than the fully closed state), the exhaust passage switching valve 14 to be opened (i.e., open the exhaust passage switching valve 14 greater than the fully closed state), and the exhaust brake valve 410 to be opened (i.e., open the exhaust brake valve 410 greater than the fully closed state) while controlling the fuel supply from the fuel supply device 402a to the diesel engine 402 to be stopped.

Accordingly, the intake air passing through the air cleaner 6 passes through the impeller 15 of the electric supercharging apparatus 1 while rotating the impeller 15 and reaches the diesel engine 402. The intake air then passes through the exhaust brake valve 410 to be discharged to the outside. The rotation of the impeller 15 causes the rotary electric machine 16 to generate the electric power.

In the aforementioned modified example, the exhaust brake valve 410 is provided at the electric supercharging system 400, however, the exhaust brake valve 410 may not be provided at the electric supercharging system 400.

In the first to third embodiments, the control portion is constituted as the ECU. Alternatively, the control portion may be separately provided from an ECU which controls each portion of the vehicle.

In addition, in the first to third embodiments, the first bypass passage that bypasses the electric supercharging apparatus is provided. Alternatively, without being provided with the first bypass passage, the electric supercharging apparatus (electric supercharging system) may be configured so that all the intake air from the air cleaner passes through the impeller of the electric supercharging apparatus regardless of turning on and off of the accelerator.

Further, in the first to third embodiments, the intake passage switching valve is arranged at the first bypass passage and the second bypass passage. Alternatively, the intake passage switching valve may be arranged at the intake passage or a joint portion between the first bypass passage or the second bypass passage and the intake passage.

Furthermore, in the first to third embodiments, even when the fuel supply to the engine 102 is stopped, the intake air passes through the intercooler 7. Alternatively, each of the electric supercharging systems 100, 200 and 300 may further include a fifth bypass passage that bypasses the intercooler 7 and an intake passage switching valve that causes the intake air to pass through the fifth bypass passage when the fuel supply is stopped.

In the disclosure, the following construction is also considerable for the electric supercharging apparatus.

The electric supercharging apparatus further includes a turbine rotated by the exhaust air emitted from the engine, the impeller being configured to rotate by the rotation of the turbine or the rotary electric machine to supercharge the engine, the impeller being configured to rotate by the intake air in a case where the fuel supply to the engine is stopped so that the rotary electric machine generates the electric power.

In the disclosure, the following construction is also considerable for the electric supercharging system.

In the electric supercharging system including the turbocharger, the control portion is configured to control the exhaust passage switching valve to switch from the passage passing through the turbine of the turbocharger to the third bypass passage that bypasses the turbocharger in a case where the fuel supply to the engine is stopped.

## Claims

1. An electric supercharging apparatus (1, 201, 301) comprising:
an impeller (15, 315); and
a rotary electric machine (16) driving and rotating the impeller (15, 315) for supercharging an engine (102),
the rotary electric machine (16) being configured to generate an electric power by a rotation of the impeller (15, 315) with an intake air based on a continuous operation of the engine (102) in a case where a fuel supply to the engine (102) is stopped.

2. The electric supercharging apparatus (1, 201, 301) according to claim 1, further comprising:
a bypass passage (9a) bypassing the impeller (15, 315); and
a passage switching valve (11a) switching between the bypass passage (9a) and a passage (8a, 8b) passing through the impeller (15, 315),
the passage switching valve (11 a) switching to the passage (8a, 8b) passing through the impeller (15, 315) for rotating the impeller (15, 315) by the intake air in a case where the fuel supply to the engine (102) is stopped.

3. An electric supercharging system (100, 200, 300, 400) comprising:
an electric supercharging apparatus (1, 201, 301) including an impeller (15, 315) and a rotary electric machine (16) which drives and rotates the impeller (15, 315), the electric supercharging apparatus (1, 201, 301) supercharging an engine (102) by driving and rotating the impeller (15, 315) by the rotary electric machine (16);
an intake control valve (10, 11 a, 11b) arranged at an intake passage (8a-8c, 208a) where an intake air suctioned by the engine (102) passes through; and
a control portion (3, 203, 303, 403) controlling the intake control valve (10, 11 a, 11 b) to cause the intake air which is suctioned on a basis of a continuous operation of the engine (102) to pass through the impeller (15, 315) to be supplied to the engine (102) in a case where a fuel supply to the engine (102) is stopped for rotating the impeller (15, 315) to perform a power generation by the rotary electric machine (16).

4. The electric supercharging system (100, 200, 300, 400) according to claim 3, wherein the control portion (3, 203, 303, 403) is configured to control an opening degree of a throttle valve (10) serving as the intake control valve to cause the intake air to be supplied to the engine (102) on a basis of the continuous operation of the engine (102) in a case where an accelerator operation relative to a vehicle (101) is turned off.

5. The electric supercharging system (100, 200, 300, 400) according to claim 3 or 4, wherein the electric supercharging apparatus (1, 201, 301) includes a first bypass passage (9a) which bypasses the impeller (15, 315) and a first intake passage switching valve (11 a) serving as the intake control valve and switching between the first bypass passage (9a) and a passage passing through the impeller (15, 315),
the control portion (3, 203, 303, 403) is configured to control the first intake passage switching valve (11 a) to switch to the passage passing through the impeller (15, 315) for rotating the impeller (15, 315) by the intake air in a case where the fuel supply to the engine (102) is stopped.

6. The electric supercharging system (100, 200, 300, 400) according to any one of claims 3 through 5, wherein the control portion (3, 203, 303, 403) is configured to control a second intake passage switching valve (11 b) serving as the intake control valve to switch from a passage passing through a turbo-side impeller (22) of a turbocharger (2) which supercharges the engine (102) by a rotation of the turbo-side impeller (22) with an exhaust air emitted from the engine (102) to a second bypass passage (9b) which bypasses the turbocharger (2) in a case where the fuel supply to the engine (102) is stopped.
